(19) Europäisches Patentamt
European Patent Office
Office européen des brevets

(11) **EP 4 431 127 A1**

(12) **EUROPEAN PATENT APPLICATION**
published in accordance with Art. 153(4) EPC

(43) Date of publication:
**18.09.2024 Bulletin 2024/38**

(21) Application number: **22890058.5**

(22) Date of filing: **07.11.2022**

(51) International Patent Classification (IPC):
**A61M 1/18** (2006.01)   **B01D 63/02** (2006.01)

(52) Cooperative Patent Classification (CPC):
**B01D 63/02**

(86) International application number:
**PCT/JP2022/041409**

(87) International publication number:
**WO 2023/080238 (11.05.2023 Gazette 2023/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.11.2021 JP 2021181728**

(71) Applicant: **Asahi Kasei Medical Co., Ltd.**
**Tokyo 100-0006 (JP)**

(72) Inventors:
• **KITANO, Masaya**
  **Tokyo 100-0006 (JP)**
• **MINAMI, Miyuki**
  **Tokyo 100-0006 (JP)**
• **NISHIZAWA, Kazuki**
  **Tokyo 100-0006 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **HOLLOW FIBER MEMBRANE-TYPE BLOOD PURIFIER**

(57) A hollow fiber membrane blood purifier containing a hollow fiber membrane and a container to be filled with the hollow fiber membrane, wherein the hollow fiber membrane contains a fat-soluble material, the amount of acetic acid per hollow fiber membrane area contained in the blood purifier is 1 to 40 mg/m$^2$, water ultrafiltration rate is 163 mL/Hr/mmHg/m$^2$ or more, and hollow fiber elongation is 55% or more.

[Figure 1]

EP 4 431 127 A1

**Description**

Technical Field

The present invention relates to a hollow fiber membrane blood purifier.

Background Art

Conventionally, hollow fiber membrane blood treatment devices using a selective permeation membrane are widely used in the field of extracorporeal blood circulation, for example, hemodialysis, application of oxygen into blood during open heart surgery, or separation of plasma.

In recent years, a blood treatment membrane using a polysulfone resin as a constituent material is widely utilized particularly in the field of blood treatment membranes such as a dialysis membrane, a gas exchange membrane, and a blood component separation membrane.

When only a polysulfone resin having high hydrophobicity is used as the constituent material of the blood treatment membrane, sufficient hemocompatibility cannot be obtained, so that a composite with a hydrophilic polymer such as polyvinylpyrrolidone is typically used.

In addition, attempts are being made to allow a blood treatment membrane to have not only a role simply as a separation membrane, but also a role to relieve the oxidative stress that occurs in long-term dialysis patients.

For example, it is considered to eliminate peroxide which is a causative material of oxidative stress by utilizing a separation membrane, or to recover the antioxidation effect of a body. Specifically, a hollow fiber membrane blood purification device in which the surface of the dialysis membrane is coated with vitamin E having various physiological effects such as an in vivo antioxidant effect, a biomembrane stabilizing effect, and a platelet aggregation inhibition effect, has been proposed.

In consideration of its application, the hollow fiber membrane blood purification device as described above is, of course, required to be completely subjected to sterilization treatment in a sealed package state before use.

As the method for sterilizing the hollow fiber membrane blood purification device, gas sterilization methods using, for example, ethylene oxide gas, autoclave methods using high pressure steam, and radiation sterilization methods using, for example, a γ ray or an electron beam are conventionally known.

Among these, with respect to the gas sterilization method using ethylene oxide gas, there is a concern about harmfulness to human bodies due to the remaining of ethylene oxide gas. With respect to the autoclave method using high pressure steam, the performance of the hollow fiber membrane blood purification device may be significantly reduced during sterilization, depending on the materials constituting the hollow fiber membrane blood purification device.

In addition, it is pointed out that, when a vitamin E-immobilized polysulfone membrane is subjected to sterilization treatment by using the above autoclave method using high pressure steam, lipophilic vitamins topically aggregate, cracks occur on the hollow fiber membrane, and as a result, blood leakage highly likely occurs (e.g., see Patent Document 1).

On the other hand, the radiation sterilization method causing no problems such as the remaining of ethylene oxide gas and the leakage through the hollow fiber membrane is a preferred sterilization method.

Incidentally, the hollow fiber membrane blood purification device as mentioned above is roughly classified into a wet-type in which gaps with the hollow inside of the hollow fiber membrane and the container are filled with an aqueous medium, and a dry-type which is not filled with an aqueous medium.

The dry-type can be further roughly classified into a type having a low membrane moisture content as low as several percent or less (a dry-type in a narrow sense), and a type in which the membrane is moderately wetted by the moisture, a moisturizing agent, or the like. The latter is sometimes referred to as a semidry-type as distinguished from the dry-type in a narrow sense. However, since their characteristics are almost the same, both types are collectively referred to as the dry-type herein.

The aforementioned dry-type has a light product weight as compared with the wet-type, and has a characteristics of being hardly frozen at low temperatures, and it can be said to be a particularly excellent product form in terms of distribution such as transportation or storage.

However, when a dry-type polysulfone-based blood treatment membrane is subjected to radiation sterilization treatment, it is known that the hydrophilic polymer constituting the hollow fiber membrane is deteriorated and eluted, resulting in a reduction in hemocompatibility.

In view of such a problem, there are proposed methods of suppressing the reduction in hemocompatibility by performing radiation sterilization while protecting the hollow fiber membrane with a certain amount of a wet protector (e.g., see Patent Document 1), and by protecting the hollow fiber membrane with a certain amount of a wet protector, controlling the oxygen concentration in the periphery of the membrane, and then performing electron beam sterilization (e.g., see Patent Document 2).

However, in the aforementioned methods, deterioration of various characteristics, in particular, deterioration of antioxidant performance may be caused upon exposure to an extreme environment, and moreover, a medical tool including a blood treatment membrane having hemocompatibility at a further high level is required.

In view of such a situation, hollow fiber membrane blood purification devices having further excellent antioxidant performance and hemocompatibility are proposed, in recent years. For example, Patent Document 3 proposes a dry-type hollow fiber membrane blood purification device including a hollow fiber membrane containing a polysulfone resin, a hydrophilic polymer, and a lipophilic vitamin, wherein the amount of the lipophilic vitamin present on the hollow fiber membrane surface is 0.5 mg or more and 25 mg or less per 1 g of the hollow fiber membrane, and 5% by mass or more and 50% by mass or less of a hydrophilic compound, including the moisture, is attached to the hollow fiber membrane based on the dry weight of the hollow fiber membrane, and the hollow fiber membrane blood purification device is subjected to radiation sterilization treatment. In addition, Patent Document 4 proposes a polysulfone-based hollow fiber membrane for blood treatment including a polysulfone resin, a hydrophilic polymer, and a fat-soluble material, wherein the amount of the fat-soluble material present on the surface of the membrane is 10 to 300 mg per 1 $m^2$, and when the content of the fat-soluble material present on the whole membrane is taken as 100% by mass, the content of the fat-soluble material present on the surface of the membrane is 40 to 95% by mass, and the clearance value of $\beta$2MG is 65 mL/min or more in terms of 1.5 $m^2$ of a blood purifier assembled by using the membrane.

List of Prior Art Documents

Patent Document

    Patent Document 1: Japanese Patent Laid-Open No. 2006-296931
    Patent Document 2: Japanese Patent Laid-Open No. 2008-93228
    Patent Document 3: Japanese Patent Laid-Open No. 2013-009761
    Patent Document 4: International Publication No. WO 2014/171172

Summary of Invention

Problems to be Solved by Invention

However, when the fat-soluble material is immobilized on the hollow fiber membrane in conventional hollow fiber membrane blood purifiers, the hollow fiber performance, in particular, albumin (hereinafter, also referred to as "Alb") leakage amount varies as compared with the hollow fiber membrane immobilized with no fat-soluble material, and the leakage amount thereof is difficult to be controlled, which is problematic. This is particularly problematic in the clinical treatment of hemodiafiltration.

Hemodiafiltration (hereinafter, also referred to as "HDF") accounts for about half of the methods recently used in dialysis treatment, as a method effective for the treatment of dialysis complications. For the improvement and treatment of dialysis complications, in particular, itching, tip pinch force, joint pain, numbness in hands and fingers, and restless legs syndrome (RLS), active removal of about several grams of Alb in clinical treatment is recommended. The amount of removal of Alb recommended (hereinafter, also referred to as the amount of bovine Alb leakage) in this clinical treatment corresponds to, in terms of the bovine blood test used upon designing a hollow fiber membrane, the removal of 1 to 3 g/h under predetermined predilution HDF conditions.

Under predilution HDF conditions (the flow rate on the blood side (QB) = 250 mL/min, the flow rate on the dialysate side (QD) = 600 mL/min, the infusion solution flow rate (Qs) = 12 L/h) mainly carried out in Japan, production of a hemodiafilter immobilized with the fat-soluble material in an amount causing no problem in clinical use while achieving the amount of bovine Alb leakage of 1.5 g or more has not been achieved by conventional coating techniques. This is because, since the higher the water permeability, the more reduced the pressure resistance strength of the hollow fiber membrane, hollow fibers are significantly highly likely to leak during clinical use due to a high transmembrane pressure (TMP) applied upon use of HDF in such a fat-soluble material-immobilized hemodiafilter that achieves the amount of bovine Alb leakage of 1.5 g or more. More specifically, the pressure resistance strength may be reduced in the hemodiafilter that achieves the amount of bovine Alb leakage of 1.5 g or more under predilution HDF conditions.

Therefore, an object of the present invention is to provide a hollow fiber membrane blood purifier containing a fat-soluble material that achieves high pressure resistance and excellent material permeability suitable for HDF clinical treatment, wherein the hollow fiber membrane blood purifier containing a fat-soluble material has a pressure resistance strength such that hollow fiber elongation is 55% or more, and an amount of bovine Alb leakage under predilution HDF conditions of 1 to 3 g per hour.

Means for Solving Problems

The present inventors have intensively studied to solve the above problems, and as a result, found that, the amount of bovine Alb leakage under predilution HDF conditions can be controlled to 1 to 3 g per hour in a fat-soluble material-immobilized hollow fiber membrane having high pressure resistance and high water ultrafiltration rate that is the basis of excellent substance permeability suitable for HDF clinical treatment by controlling the amount of acetic acid per hollow fiber membrane area contained in the blood purifier to a specific range in the hollow fiber membrane blood purifier containing a fat-soluble material, and thus accomplished the present invention.

That is, the present invention is as follows.

[1] A hollow fiber membrane blood purifier comprising a hollow fiber membrane and a container to be filled with the hollow fiber membrane, wherein

the hollow fiber membrane contains a fat-soluble material,
an amount of acetic acid per hollow fiber membrane area contained in the blood purifier is 1 to 40 mg/m$^2$,
water ultrafiltration rate is 163 mL/Hr/mmHg/m$^2$ or more, and
hollow fiber elongation is 55% or more.

[2] The hollow fiber membrane blood purifier according to [1], wherein the fat-soluble material contains at least one selected from the group consisting of vitamin A, vitamin D, vitamin E, and vitamin K.
[3] The hollow fiber membrane blood purifier according to [1] or [2], wherein the hollow fiber membrane is a hollow fiber membrane immobilized with the fat-soluble material.
[4] The hollow fiber membrane blood purifier according to [1] or [2], wherein the hollow fiber membrane is a hollow fiber membrane immobilized with a lipophilic vitamin.
[5] The hollow fiber membrane blood purifier according to any of [1] to [4], wherein the amount of acetic acid per hollow fiber membrane area contained in the blood purifier is 1 to 30 mg/m$^2$.
[6] The hollow fiber membrane blood purifier according to any of [1] to [5], wherein water ultrafiltration rate is 163 to 350 mL/Hr/mmHg/m$^2$.
[7] The hollow fiber membrane blood purifier according to any of [1] to [6], wherein hollow fiber elongation is 61 to 80%.
[8] The hollow fiber membrane blood purifier according to any of [1] to [7], wherein an amount of the fat-soluble material immobilized in the hollow fiber membrane is 1 to 500 mg/m$^2$.
[9] The hollow fiber membrane blood purifier according to any of [1] to [8], wherein a material constituting the hollow fiber membrane contains at least one selected from the group consisting of a hydrophilic polymer and a hydrophobic polymer.
[10] The hollow fiber membrane blood purifier according to any of [1] to [9], wherein an inner diameter of the hollow fiber membrane is 170 $\mu$m or more and 250 $\mu$m or less.
[11] The hollow fiber membrane blood purifier according to any of [1] to [10], wherein a membrane thickness of the hollow fiber membrane is 10 $\mu$m or more and 50 $\mu$m or less.
[12] A method for producing the hollow fiber membrane blood purifier according to any of [1] to [11], comprising

an immobilization step of immobilizing a fat-soluble material on a hollow fiber membrane,
wherein, in the immobilization step, a coating solution obtained by dissolving the fat-soluble material in an organic solvent is infused to an inside of hollow fiber, and a pressure difference between the inside and an outside of the hollow fiber (inside - outside) when the coating solution is dewatered with compressed air is set to -0.1 MPa or more, in the immobilization step.

[13] The method for producing the hollow fiber membrane blood purifier according to [12], wherein, in the immobilization step, the hollow fiber membrane is dried with oxygen-containing air at 40 to 60°C after the coating solution is dewatered.
[14] The method for producing the hollow fiber membrane blood purifier according to [12] or [13], further comprising a step of wetting the hollow fiber membrane.
[15] The method for producing the hollow fiber membrane blood purifier according to any of [12] to [14], further comprising a step of subjecting the hollow fiber membrane blood purifier to sterilization treatment.

Advantages of Invention

The hollow fiber membrane blood purifier of the present invention can control the amount of bovine Alb leakage under predilution HDF conditions to a range of 1 to 3 g per hour in the fat-soluble material-immobilized hollow fiber membrane having both high pressure resistance and high water ultrafiltration rate that is the basis of excellent material permeability suitable for HDF clinical treatment, and can provide a hollow fiber membrane blood purifier immobilized with a fat-soluble material, which has been desired in HDF clinical treatment for a long time.

Brief Description of Drawings

[Figure 1] Figure 1 is a schematic diagram of an example of a device used in the measurement of the amount of acetic acid contained in a dry-type hollow fiber membrane blood purifier.
[Figure 2] Figure 2 is a schematic diagram of an example of a circuit that allows water to flow as a priming in the measurement of the water ultrafiltration rate of the hollow fiber membrane blood purifier.
[Figure 3] Figure 3 is a schematic diagram of an example of a circuit used in the measurement of the water ultrafiltration rate of the hollow fiber membrane blood purifier.

Mode for Carrying Out Invention

Hereinafter, the embodiment for implementing the present invention (hereinafter, referred to as "the present embodiment") will be described in detail. However, the present invention is not limited to the following embodiment, and can be variously modified within the scope of the gist thereof and implemented.

<Hollow Fiber Membrane Blood Purifier>

The hollow fiber membrane blood purifier of the present embodiment is

a hollow fiber membrane blood purifier containing a hollow fiber membrane and a container to be filled with the hollow fiber membrane, wherein
the hollow fiber membrane contains a fat-soluble material,
the amount of acetic acid per hollow fiber membrane area contained in the blood purifier is 1 to 40 mg/m$^2$,
water ultrafiltration rate is 163 mL/Hr/mmHg/m$^2$ or more, and
hollow fiber elongation is 55% or more.
With such a configuration, the hollow fiber membrane blood purifier of the present embodiment can achieve an amount of bovine Alb leakage under predilution HDF conditions of 1 to 3 g per hour while having a pressure resistance strength such that hollow fiber elongation is 55% or more, even in the hollow fiber membrane blood purifier containing a fat-soluble material.

<Amount of Acetic Acid>

In the hollow fiber membrane blood purifier of the present embodiment, the amount of acetic acid per hollow fiber membrane area is 1 to 40 mg/m$^2$, preferably 1 to 30 mg/m$^2$, and more preferably 1 to 20 mg/m$^2$.
When the amount of acetic acid per hollow fiber membrane area is in the range, the hollow fiber membrane blood purifier of the present embodiment can achieve the amount of bovine Alb leakage under predilution HDF conditions of 1 to 3 g per hour.
Examples of the method for controlling the amount of acetic acid per hollow fiber membrane area to the range include, but are not particularly limited to, the method for carrying out a step of immobilizing the fat-soluble material described below.
In the present embodiment, the amount of acetic acid per hollow fiber membrane area can be measured by the method described in Examples described below.

<Water Permeation Performance>

In the hollow fiber membrane blood purifier of the present embodiment, water ultrafiltration rate is 163 mL/Hr/mmHg/m$^2$ or more, preferably 163 to 350 mL/Hr/mmHg/m$^2$, and more preferably 163 to 300 mL/Hr/mmHg/m$^2$.
When the water ultrafiltration rate is in the range, the hollow fiber membrane blood purifier of the present embodiment can achieve the amount of bovine Alb leakage under predilution HDF conditions of 1 to 3 g per hour.
Examples of the method for controlling water ultrafiltration rate to the range include, but are not particularly limited to, the method for carrying out a step of immobilizing the fat-soluble material described below and the method for appropriately adjusting the kind and content of materials constituting the hollow fiber membrane.

In the present embodiment, water ultrafiltration rate can be measured by the method described in Examples described below.

The hollow fiber membrane blood purifier of the present embodiment is used in, for example, extracorporeal circulation blood purification therapy such as hemodialysis, hemofiltration, hemodiafiltration, blood component fraction, application of oxygen, and separation of plasma, without particular limitation.

The hollow fiber membrane blood purifier of the present embodiment is preferably used as a hemodialyzer, a hemofilter, a hemodiafilter, or the like, and is more preferably used as a continuous hemodialyzer, a continuous hemofilter, and a continuous hemodiafilter which are continuous applications thereof. The detailed specifications such as the dimension and fractionation properties of the hollow fiber membrane are determined according to each application.

Since the hollow fiber membrane blood purifier of the present embodiment has a pressure resistance strength such that hollow fiber elongation is 55% or more and can achieve the amount of bovine Alb leakage under predilution HDF conditions of 1 to 3 g per hour, it can be suitably used for the improvement and treatment of dialysis complications, in particular, itching, pulp pinch force, joint pain, numbness in hands and fingers, and RLS.

To prevent and improve complications due to dialysis treatment, the removal of materials in the $\alpha$1-microglobulin (hereinafter, also referred to as "$\alpha$1-MG") region (molecular weight: 30000 to 40000) is said to be effective. In particular, to prevent and improve itching, pulp pinch force, joint pain, numbness in hands and fingers, and RLS, 10% or more of the $\alpha$1-MG removal rate throughout the treatment is required. On the other hand, Alb is a material whose leakage is desired to be suppressed in the dialysis treatment, from the viewpoint that Alb has an action of adjusting osmotic pressure and an action as a nutrient. However, from the viewpoint of a fraction molecular weight, the blood purifier that removes 10% or more of the $\alpha$1-Mg region only and allows no Alb to leak out has not been developed yet. Thus, in recent dialysis treatment, the $\alpha$1-MG region is removed while accepting a certain amount (1 g to 3 g) of Alb leakage, in many cases.

Meanwhile, it is also pointed out that Alb is oxidized by oxidative stress and bonded with a uremic toxin, so that Alb itself is highly likely to change into a uremic toxin. Thus, there is also an idea that a certain amount of Alb should be actively removed to promote the metabolism of Alb. For the above reasons, use of a hemodiafilter having such a performance that the amount of bovine Alb leakage is 1 g or more in the HDF treatment (predilution HDF conditions) in which the removal of materials by filtration is dominant and uremic toxin protein can be efficiently removed has become mainstream in recent years. Further, since the hemodialyzer immobilized with a fat-soluble material (e.g., vitamin E) has good biocompatibility and a clinical effect by the antioxidant effect of the fat-soluble material is expected, it is widely used in Japan and Europe.

However, as mentioned above, it is significantly difficult to produce a hemodiafilter that achieves the amount of bovine Alb leakage of 1 to 3 g under predilution HDF conditions while immobilizing a fat-soluble material, by conventional techniques. The present invention can provide a hollow fiber membrane blood purifier containing a fat-soluble material (e.g., vitamin E) while achieving the amount of bovine Alb leakage of 1 to 3 g that is said to be effective for the prevention and improvement of dialysis complications. Further, by controlling the amount of acetic acid per hollow fiber membrane area contained in the blood purifier to a specific range, the present invention can also provide, for example, an arbitrary vitamin E-immobilized hemodiafilter that achieves the amount of bovine Alb leakage of 1 to 3 g from the hollow fiber membrane having only one performance. That is, the present invention can provide, for example, a hemodiafilter that is a hollow fiber membrane blood purifier immobilized with vitamin E and further contributes to the prevention and improvement of a wide variety of dialysis complications.

From the viewpoint of permeability, crimp is preferably applied to the hollow fiber membrane used in the hollow fiber membrane blood purifier of the present embodiment. The method for applying crimp is not particularly limited, and a publicly known method can be used.

<Fat-Soluble Material>

In the hollow fiber membrane blood purifier of the present embodiment, the hollow fiber membrane contains a fat-soluble material.

In the present embodiment, the fat-soluble material refers to a material that is generally hardly soluble in water and is soluble in alcohols and fats and oils, and a natural or synthetic material having low toxicity can be used. Specific examples of the fat-soluble material include, but are not particularly limited to, cholesterol; vegetable oils such as castor oil, lemon oil, and shea butter; animal oils such as fish oil; fatty acids such as sucrose fatty acid ester and polyglycerol fatty acid ester; isoprenoid; hydrocarbons having a large number of carbon atoms; and silicone oils. In addition, vitamin A, vitamin D, vitamin E, and vitamin K which are lipophilic vitamins, and ubiquinone and the like are also preferably used.

Above all, the fat-soluble material preferably contains at least one selected from the group consisting of vitamin A, vitamin D, vitamin E, and vitamin K. Among these, vitamin E is preferable from the viewpoint that excess intake thereof does not induce disorder. The fat-soluble material may be used singly or as a mixture of two or more kinds.

Examples of vitamin E include $\alpha$-tocopherol, $\alpha$-tocopherol acetate, $\alpha$-tocopherol nicotinate, $\beta$-tocopherol, $\gamma$-tocopherol, $\delta$-tocopherol, and mixtures thereof. Above all, $\alpha$-tocopherol is preferable since it is excellent in various physiological effects such as an in vivo antioxidant effect, a biomembrane stabilizing effect, and a platelet aggregation inhibition effect, and has a high effect of suppressing oxidative stress.

The hollow fiber membrane used in the present embodiment is preferably a hollow fiber membrane immobilized with the fat-soluble material, and more preferably a hollow fiber membrane immobilized with a lipophilic vitamin.

The amount of the fat-soluble material immobilized in the hollow fiber membrane is preferably 1 to 500 mg/m2. When the amount of the fat-soluble material immobilized in the hollow fiber membrane is 1 $mg/m^2$ or more, sufficient antioxidant performance can be obtained, and when it is 500 $mg/m^2$ or less, hemocompatibility is excellent. Further, it is more preferably 10 to 300 $mg/m^2$.

In the present embodiment, "the amount of the fat-soluble material immobilized in the hollow fiber membrane" refers to the amount of the fat-soluble material that is bonded to, attached to, adsorbed to, or covers the entire hollow fiber membrane, and the amount of the fat-soluble material present on the entire hollow fiber membrane can be quantitatively determined by, for example, the amount of the fat-soluble material extracted with a solvent without breaking or dissolving the hollow fiber membrane, as described below.

One example of the method for measuring the amount of the fat-soluble material in the hollow fiber membrane will be described.

First, the hollow fiber membrane blood purifier into which the hollow fiber membrane is incorporated is disassembled, and the hollow fiber membrane is collected, washed with water, and then subjected to drying treatment. Subsequently, a surfactant or an organic solvent that dissolves the fat-soluble material, for example, 1% by mass of an aqueous polyethylene glycol-t-octylphenyl ether solution or ethanol is added to the precisely weighed hollow fiber membrane after drying, and the mixture is stirred and extracted. The membrane area of the extracted hollow fiber membrane is the nominal hollow fiber membrane area provided by manufacturers (the hollow fiber membrane area described in a label), or the internal surface area calculated from the product of the average internal diameter (diameter), circumference ratio, number, and effective length of the hollow fiber membrane. The effective length refers to the hollow fiber length having permeability, excluding the urethane sealing part and the like from the entire length of the hollow fiber membrane.

The quantitative manipulation is carried out by, for example, liquid chromatograph, and the concentration of the fat-soluble material in an extraction liquid is calculated by using a calibration curve obtained from the peak area of the standard solution of the fat-soluble material.

The amount of the fat-soluble material ($mg/m^2$) in the hollow fiber membrane can be determined from the obtained concentration of the fat-soluble material and the extracted membrane area of the hollow fiber membrane by taking the extraction efficiency as 100%.

The liquid chromatograph described as an example can be conducted as follows. A column (ODP-506E packed column for HPLC manufactured by Shodex Asahipak) is attached to a high performance liquid chromatography apparatus (pump: JASCO PU-1580, detector: SHIMADZU RID-6A, Autoinjector: SHIMADZU SIL-6B, data processing: Tosoh GPC-8020, column oven: GL Sciences556), methanol for high-performance liquid chromatography as a mobile phase is made to flow, for example, at a flow rate of 1 mL/min at a column temperature of 40°C, and the concentration of the fat-soluble material is determined from the absorption peak area at a wavelength of 295 nm using a UV detector.

<Hydrophilic Polymer and Hydrophobic Polymer>

The material constituting the hollow fiber membrane preferably contains at least one selected from the group consisting of a hydrophilic polymer and a hydrophobic polymer. When the hollow fiber membrane contains such a material, the hollow fiber membrane tends to be a membrane having high physical strength and being excellent in biocompatibility.

In particular, the hollow fiber membrane preferably contains a hydrophilic polymer at least on a separation function surface. By containing a hydrophilic polymer, the hollow fiber membrane tends to have good biocompatibility.

The hydrophilic polymer is not particularly limited as long as it is a polymer having a high affinity for water, and examples thereof include polymers having a solubility parameter $\delta$ $(cal/cm^3)^{1/2}$ of 10 or more and polymers having a hydroxy group.

The solubility parameter $\delta$ is an index described in, for example, "Polymer Data Handbook, Basic Edition" edited by The Society of Polymer Science, Baifukan Co., Ltd., published on January 30, 1986, first edition, pp. 591 to 593, and a high solubility parameter indicates high hydrophilicity, and a low solubility parameter indicates high hydrophobicity.

Examples of the polymer having a solubility parameter $\delta$ $(cal/cm^3)^{1/2}$ of 10 or more include, but are not particularly limited to, polyhydroxyethyl methacrylate ($\delta$ = 10.00), cellulose diacetate ($\delta$ = 11.35), and polyacrylonitrile ($\delta$ = 12.35). The value described as $\delta$ is described as one example.

Examples of the polymer having a hydroxy group include, but are not particularly limited to, polyhydroxyalkyl methacrylates such as polyhydroxyethyl methacrylate, polyhydroxypropyl methacrylate, and polyhydroxybutyl methacrylate, and sodium salts of polysaccharides such as sodium alginate, sodium hyaluronate, and sodium heparin. Polyhydroxyalkyl methacrylate is a synthetic polymer obtained by (co)polymerizing hydroxyalkyl methacrylate as a monomer unit and is a compound having a hydroxy group on a side chain.

Examples of the hydrophilic polymer include, but are not particularly limited to, polyvinylpyrrolidone (hereinafter, also referred to as "PVP"), polyethylene glycol (hereinafter, also referred to as "PEG"), polyvinyl alcohol (hereinafter, also referred to as "PVA"), and polypropylene glycol.

These hydrophilic polymers may be used singly or as a mixture of two or more kinds thereof.

Above all, at least one selected from the group consisting of polyvinylpyrrolidone (PVP) and polyethylene glycol (PEG) is preferably contained as the hydrophilic polymer. When the hollow fiber membrane contains such a hydrophilic polymer, the hollow fiber membrane tends to have good biocompatibility.

Examples of the hydrophobic polymer include, but are not particularly limited to, polysulfone resins such as polysulfone (PS), polyethersulfone (PES), and polyarylethersulfone (PAES); cellulose resins such as regenerated cellulose, cellulose acetate, and cellulose triacetate (CTA); polyacrylonitrile (PAN), polyvinylidene fluoride (PVDF), polymethyl methacrylate, and an ethylene vinyl alcohol copolymer. Above all, a polysulfone resin is preferable.

The polysulfone resin is a sulfonyl ($-SO_2-$) group-containing synthetic polymer and is excellent in heat resistance and chemical resistance. Examples of the polysulfone resin include, but are not particularly limited to, polyphenylenesulfone, polysulfone, polyarylethersulfone, polyethersulfone, and copolymers thereof. The polysulfone resin may be used singly or as a mixture of two or more kinds thereof.

Above all, from the viewpoint of controlling fractionation properties, a polysulfone polymer represented by the following formula (1) or the following formula (2) is preferable.

$$(-Ar-SO_2-Ar-O-Ar-C(CH_3)_2-Ar-O-)_n \qquad (1)$$

$$(-Ar-SO_2-Ar-O-)_n \qquad (2)$$

In the formula (1) and the formula (2), Ar represents a benzene ring, and n represents a repetition of the monomer unit. Polysulfone represented by the formula (1) is commercially available, for example, under the name of "Udel(trademark)" from Solvay and under the name of "Ultrason(trademark)" from BASF, and polyethersulfone represented by the formula (2) is commercially available under the name of "SUMIKAEXCEL(trademark)" from Sumitomo Chemical Co., Ltd. There are several types depending on the degree of polymerization and the like, and these can be appropriately utilized.

<Antioxidant>

In the present embodiment, the hollow fiber membrane is preferably sterilized in an aqueous antioxidant solution, from the viewpoint of hemocompatibility, and this is preferable since the oxidation of, in particular, the fat-soluble material in the hollow fiber membrane in a sterilization step is suppressed.

The antioxidant is not particularly limited, as long as it is an atom, molecule, or ion having properties of easily imparting electrons to other molecules and the like, and examples thereof include an ultraviolet absorber and a light stabilizer, a metal deactivator, an ozone deterioration inhibitor, an amine antioxidant, a phenolic antioxidant, a sulfur antioxidant, and a phosphorous antioxidant.

Examples of the ultraviolet absorber and the light stabilizer include, but are not particularly limited to, phenyl salicylate, monoglycol salicylate, p-tert-butylphenyl salicylate, 2-hydroxy-4-methoxybenzophenone, 2-hydroxy-4-octoxybenzophenone, and 2(2'-hydroxy-5'-methylphenyl)benzotriazole.

Examples of the metal deactivator include, but are not particularly limited to, N-salicyloyl-N'-aldehydehydrazine, N-salicyloyl-N'-acetylhydrazine, and N,N'-diphenyl oxamide.

Examples of the ozone deterioration inhibitor include, but are not particularly limited to, 6-ethoxy-2,2,4-trimethyl-1,2-dihydroquinoline and N-phenyl-N'-isopropyl-p-phenylenediamine.

Examples of the amine antioxidant include, but are not particularly limited to, phenyl-β-naphthylamine, α-naphthylamine, and phenothiazine.

Examples of the phenolic antioxidant include, but are not particularly limited to, 2,6-di-tert-butyl-p-cresol, 2,6-di-tert-butylphenol, and 2,4-di-methyl-6-tert-butylphenol.

Examples of the sulfur antioxidant include, but are not particularly limited to, dilauryl thiodipropionate, lauryl stearyl thiodipropionate, dilauryl sulfide, sodium hydrogen bisulfite, sodium pyrosulfite, sodium sulfite, sodium hydrogen pyrosulfite, sodium hypodisulfite, and acetone sodium hydrogen bisulfite.

Examples of the phosphorous antioxidant include, but are not particularly limited to, triphenyl phosphite and tridodecyl phosphite.

The antioxidant is not particularly limited, and for example, L-ascorbic acid, cysteine, thioglycerol, or isopropyl citrate may be used.

The antioxidant may be used singly or as a mixture of two or more kinds thereof.

Above all, sodium hydrogen bisulfite, sodium pyrosulfite, sodium sulfite, or sodium hydrogen pyrosulfite is preferable from the viewpoint of handling properties.

When the hollow fiber membrane is sterilized in an aqueous antioxidant solution, it is suitable that an antioxidant be dissolved in water and then the hollow fiber membrane be irradiated with radiation in a state of being wetted by the aqueous solution.

The concentration of the antioxidant in the aqueous antioxidant solution is preferably 50 ppm or more and 2000 ppm or less. A pH adjusting agent such as sodium carbonate; sodium chloride, glycerin or the like may coexist in the aqueous antioxidant solution, in addition to the antioxidant.

In the hollow fiber membrane blood purifier of the present embodiment, the hollow fiber elongation is 55% or more, preferably 55 to 100%, more preferably 61 to 80%, and still more preferably 61 to 70%. When the hollow fiber elongation is within the range, there is a tendency that the pressure resistance strength of the hollow fiber membrane is improved and the occurrence of leakage can be suppressed.

Examples of the method for controlling hollow fiber elongation within the range include, but are not particularly limited to, the method for carrying out a step of immobilizing the fat-soluble material described below and the method for appropriately adjusting the kind and content of materials constituting the hollow fiber membrane.

In the present embodiment, hollow fiber elongation can be measured by the method described in Examples described below.

<Method for Producing Hollow Fiber Membrane>

The hollow fiber membrane used in the present embodiment can be produced by utilizing a known dry and wet(dry-wet) film forming technique. Examples of the method include, but are not particularly limited to, a method having a spinning step of performing a dry spinning method to obtain a membrane intermediate material containing a hydrophilic polymer and a hydrophobic polymer, and an immobilization step of immobilizing a fat-soluble material on the membrane intermediate material.

In the hollow fiber membrane used in the present embodiment, it is not necessary to use both the hydrophilic polymer and the hydrophobic polymer, and the hollow fiber membrane may be a single material membrane.

In the step of producing the hollow fiber membrane, examples of the method include, but are not limited to, a method in which a tube-in-orifice spinneret is used and a spinning dope and a hollow inner liquid for coagulating the spinning dope are simultaneously discharged from the orifice of the spinneret and the tube, respectively, into the air.

As the hollow inner liquid, water or a coagulation liquid mainly made of water can be used, and the composition thereof may be determined according to the permeability of the hollow fiber membrane of interest. Typically, a mixed solution of a solvent used in the spinning dope and water is suitably used.

The spinning dope discharged from the spinneret with the hollow inner liquid is made to run on an air gap part, introduced into a coagulation bath mainly made of water installed on a lower part of the spinneret, immersed therein, thereby completing coagulation. After passing through a washing step and the like, the hollow fiber membrane in a wet state is wound with a winding machine to obtain a hollow fiber membrane bundle, which is then subjected to drying treatment. Alternatively, after passing through the above washing step, the hollow fiber membrane may be dried in a drying machine to obtain a hollow fiber membrane bundle.

Specific examples of the method for producing the hollow fiber membrane used in the present embodiment include, but are not particularly limited to, a method for carrying out a usual membrane formation step by using a membrane-forming spinning dope containing a polysulfone resin and polyvinylpyrrolidone.

The membrane-forming spinning dope can be adjusted by, for example, dissolving a polysulfone resin and polyvinylpyrrolidone in a solvent.

Examples of such a solvent include, but are not particularly limited to, dimethylacetamide, dimethylsulfoxide, N-methyl-2-pyrrolidone, dimethylformamide, sulfolane, and dioxane.

The solvent may be used singly or as a mixed solvent of two or more kinds thereof.

The concentration of the polysulfone resin in the membrane-forming spinning dope is not particularly limited, as long as it is in the range of concentrations at which the membrane can be formed and the resulting membrane has the performance as a permeation membrane, and is preferably 5% by mass or more and 35% by mass or less, and more preferably 10% by mass or more and 30% by mass or less when the resin composition is taken as 100% by mass. When high water ultrafiltration rate is achieved, a lower polysulfone resin concentration is preferable, and the concentration is still more preferably 10% by mass or more and 25% by mass or less.

The polyvinylpyrrolidone concentration in the membrane-forming spinning dope is adjusted so that the mixing ratio of polyvinylpyrrolidone to the polysulfone resin is preferably 27% by mass or less, more preferably 18% by mass or more and 27% by mass or less, and still more preferably 20% by mass or more and 27% by mass or less.

By setting the mixing ratio of polyvinylpyrrolidone to the polysulfone resin to 27% by mass or less, the amount of polyvinylpyrrolidone eluted can be suppressed. Suitably, by setting the mixing ratio to 18% by mass or more, the polyvinylpyrrolidone concentration of the separation function surface can be controlled to a suitable range, the effect of suppressing the protein adsorption can be enhanced, and the hemocompatibility is excellent.

Using the membrane-forming spinning dope, a hollow fiber membrane is formed by a method usually used. For example, using a tube-in-orifice spinneret, a membrane-forming spinning dope and a hollow inner liquid for coagulating the membrane-forming spinning dope are simultaneously discharged from the orifice of the spinneret and the tube, respectively, into the air. As the hollow inner liquid, water or a liquid mainly made of water can be used. Typically, a mixed solution of a solvent used in the membrane-forming spinning dope and water is suitably used as the hollow inner liquid. For example, 20% by mass or more and 70% by mass or less of an aqueous dimethylacetamide solution or the like can be used.

By adjusting the amount of the membrane-forming spinning dope discharged and the amount of the hollow inner liquid discharged, the inner diameter and membrane thickness of the hollow fiber membrane can be adjusted to a desired value.

The inner diameter of the hollow fiber membrane is generally only required to be 170 $\mu$m or more and 250 $\mu$m or less in blood treatment applications, preferably 180 $\mu$m or more and 220 $\mu$m or less. From the viewpoint of the diffusion and removal efficiency of low-molecular weight materials by the mass transfer resistance as the permeation membrane, the membrane thickness of the hollow fiber membrane is preferably 50 $\mu$m or less. From the viewpoint of strength, the membrane thickness of the hollow fiber membrane is preferably 10 $\mu$m or more.

In the present embodiment, the inner diameter and membrane thickness of the hollow fiber membrane can be measured by the method described in Examples described below.

The membrane-forming spinning dope discharged from the spinneret together with the hollow inner liquid is made to run on an air gap part, introduced into a coagulation bath mainly made of water installed on a lower part of the spinneret, and then immersed therein for a certain time, thereby completing coagulation. In this case, a draft represented by the ratio of the linear discharge velocity of a membrane-forming spinning dope to the take-over speed thereof is preferably 1 or less.

The air gap refers to a space between the spinneret and the coagulation bath, and in the membrane-forming spinning dope, coagulation is initiated from the inner surface side by a poor solvent component such as water in the hollow inner liquid simultaneously discharged from the spinneret. The draft is preferably 1 or less, and more preferably 0.95 or less since a smooth hollow fiber membrane surface is formed and the hollow fiber membrane structure is stable upon initiation of coagulation.

Then, after the solvent remaining on the hollow fiber membrane is removed by washing with hot water or the like, the hollow fiber membrane is put in a drying chamber to remove the moisture in the hollow fiber membrane.

<Method for Producing Hollow Fiber Membrane Blood Purifier>

The hollow fiber membrane blood purifier is assembled based on the hollow fiber membrane obtained through the above steps. First, a cylindrical container having two nozzles in the vicinity of both end parts of the side surface is filled with the hollow fiber membrane, and both end parts thereof are embedded with a urethane resin. Then, the cured urethane portions are cut and processed so that the end parts at which the hollow fiber membrane is open are formed. A header cap having a nozzle for letting a liquid such as blood or dialysate in (out) is loaded to the both end parts, whereby the shape of the hollow fiber membrane blood purifier is assembled.

<Step of Immobilizing Fat-Soluble Material on Hollow Fiber Membrane>

In the present embodiment, the amount of acetic acid per hollow fiber membrane area and water ultrafiltration rate can be controlled to the aforementioned range by carrying out the following coating method as the step of immobilizing the fat-soluble material on the hollow fiber membrane. The coating method is a method for attaching the fat-soluble material on the hollow fiber membrane surface by flowing a fat-soluble material solution into the hollow part on the inner surface side of the hollow fiber membrane.

In the coating method, the fat-soluble material is immobilized on the formed hollow fiber membrane, and then the hollow fiber membrane blood purifier may be assembled, or the fat-soluble material may be immobilized by allowing the coating solution to flow after assembling or in the middle stage of assembling the hollow fiber membrane blood purifier.

The concentration of the fat-soluble material in the coating solution is preferably 0.1% by mass or more and 30% by mass or less, more preferably 0.1% by mass or more and 20% by mass or less, and still more preferably 0.1% by mass or more and 10% by mass or less, when the total amount of the coating solution is taken as 100% by mass.

The step of immobilizing the fat-soluble material includes a liquid-infusing step and a dewatering step. The liquid-infusing step is a step of infusing a coating solution obtained by dissolving a fat-soluble material (e.g., vitamin E) in an organic solvent (e.g., 2-propanol) to the inside of the hollow fiber. At this time, the coating solution may be infused to the inside of the hollow fiber with the port on the dialysate side closed. The amount of the coating solution may be appropriately set. Thereafter, the coating solution is dewatered with compressed air as the dewatering step. When the coating solution is dewatered with compressed air, the compressed air is fed from either the inside or the outside of the hollow fiber, or from both of them, and at this time, the pressure difference between the inside and the outside of the hollow fiber (inside - outside) is -0.1 MPa or more, and preferably more than 0 MPa, that is, the pressure of the inside of the hollow fiber is made higher than the pressure of the outside thereof. The upper limit of the pressure difference (inside - outside) is not particularly limited, and is, for example, 0.1 MPa. Moreover, 0.1 MPa or more of compressed air may be fed only to the inside of the hollow fiber for dewatering, with the port on the module dialysate side closed. Also, dewatering may be carried out by feeding compressed air only to the inside of the hollow fiber in a pulse. The pressure applied to the inside and the outside of the hollow fiber during dewatering may be appropriately set, and it is preferable that the pressure of the inside of the hollow fiber be made high to allow a large amount of the coating solution to remain on the membrane thickness part. Thereafter, the coating solution remaining on the hollow fiber membrane is slowly removed by drying with oxygen-containing air in a drying step. The temperature of the air used in drying is preferably 40 to 60°C.

In the present embodiment, by carrying out the step of immobilizing the fat-soluble material on the hollow fiber membrane as mentioned above, the amount of acetic acid per hollow fiber membrane area and hollow fiber elongation can be easily controlled to the aforementioned range.

Herein, by carrying out the step of immobilizing the fat-soluble material on the hollow fiber membrane as mentioned above, the amount of acetic acid per hollow fiber membrane area can be easily controlled to a specific range, and the Alb leakage can also be controlled. Although the mechanism is not clear, the present inventors presume the generation mechanism of acetic acid as follows.

In the dewatering step, the pressure of the inside of the hollow fiber is typically made higher than the pressure of the outside thereof to efficiently carry out dewatering from the blood side. However, by setting the pressure difference between the inside and the outside of the hollow fiber (inside - outside) to -0.1 MPa or more, preferably more than 0 MPa, that is, by making the pressure of the inside of the hollow fiber higher than the pressure of the outside thereof, and the like, dewatering efficiency is intentionally lowered, and a large amount of the coating solution is allowed to remain on the hollow fiber membrane thickness part subjected to the dewatering step. When drying is slowly carried out in this state with oxygen-containing air at 40 to 60°C, the organic solvent contained in the coating solution is considered to be oxidatively decomposed to be acetic acid. Then, the present inventors have surprisingly found that the amount of acetic acid contained in the blood purifier has correlation with the amount of bovine Alb leakage in a predetermined amount of range, and the amount of bovine Alb leakage can be controlled by controlling the amount of acetic acid.

The difficulty of the control of the amount of bovine Alb leakage is a big challenge in the hollow fiber membrane immobilized with the fat-soluble material. There are several methods with respect to the method for immobilizing the fat-soluble material on the hollow fiber membrane, and examples thereof include a method for attaching a fat-soluble material on a hollow fiber membrane surface by infusing a coating solution obtained by dissolving the fat-soluble material in an organic solvent to the inside of the hollow fiber. As a result, the change in the pore diameter of the hollow fiber membrane and the change in the hydrophilicity/hydrophobicity of the membrane surface, especially, the reduction in the pore diameter and the reduction in hydrophilicity are caused due to the attached fat-soluble material, leading to the reduction in Alb leakage.

Further, it is considered that the molecules constituting the hollow fiber membrane are cross-linked by the energy of radiation in radiation sterilization, resulting in a change in the pore size of the hollow fiber. The present inventors have first succeeded in intentionally lowering the dewatering efficiency in the step of immobilizing the fat-soluble material on the hollow fiber membrane, in particular, in the dewatering step, slowly carrying out drying with oxygen-containing air in this state to generate a predetermined amount of acetic acid, and achieving an optimal membrane design under HDF clinical conditions based on the correlation between the amount of acetic acid generated and the amount of bovine Alb leakage.

In the hemodiafilter, pressure loss and membrane resistance are reduced by making the inner diameter of the hollow fiber membrane large and making the membrane thickness thereof thin, from the viewpoint of suppressing an increase in the transmembrane pressure difference (hereinafter, also referred to as "TMP"). From such a viewpoint, for example, the inner diameter of the hollow fiber membrane is preferably 200 $\mu$m or more and the membrane thickness is preferably less than 45 $\mu$m. Further, the higher the water ultrafiltration rate of the raw fiber, the more preferable it is. However, a hollow fiber membrane obtained by coating a fat-soluble material on a hollow fiber membrane having an inner diameter of 200 $\mu$m or more, a membrane thickness of less than 45 $\mu$m, and high water ultrafiltration rate by a known method, has a low pressure resistance strength and is unsuitable for HDF. Thus, the development of a high flux membrane for HDF (the amount of bovine Alb leakage is 1 g or more) is significantly difficult. However, the present inventors have found that, by carrying out the step of immobilizing the fat-soluble material on the hollow fiber membrane as mentioned above, the amount of acetic acid per hollow fiber membrane area and hollow fiber elongation can be easily controlled to the aforementioned range, and as a result, the amount of bovine Alb leakage upon use in predilution HDF can be controlled to the range of 1 to 3 g. In addition, the relationship between the amount of acetic acid and the amount of bovine Alb leakage does not depend on the inner diameter, membrane thickness, and water ultrafiltration rate of the hollow fiber membrane. Thus, when the amount of acetic acid per hollow fiber membrane area contained in the blood purifier after sterilization is controlled to 1 to 40 mg/m$^2$ by using the present technique, the Alb leakage can be arbitrarily controlled to 1 to 3 g upon use of predilution HDF, regardless of the inner diameter and membrane thickness of the hollow fiber membrane. Further, in consideration of the balance between the Alb leakage and the dialysis complication that can be improved, the amount of acetic acid per hollow fiber membrane area contained in the blood purifier is preferably 1 to 30 mg/m$^2$, and more preferably 1 to 20 mg/m$^2$.

When, among hemodialyzers in which a fat-soluble material is immobilized by using a conventional coating technique, one having the largest Alb leakage is used under predilution HDF conditions, the amount of bovine Alb leakage is 1.5 g. However, hollow fiber elongation, which is a parameter of pressure resistance strength, is 53%, and the hollow fiber membrane is unsuitable for use in HDF, in the first place. Thus, it is impossible to produce a blood purifier that can secure 1.5 g or more of the amount of bovine Alb leakage and 55% or more of hollow fiber elongation by conventional coating techniques.

However, by carrying out the step of immobilizing the fat-soluble material on the hollow fiber membrane as mentioned above, the pressure resistance strength capable of being used in a hemodiafilter, that is, the hollow fiber elongation of 55% or more is achieved, and further, the Alb leakage can be arbitrarily controlled to 1 to 3 g while immobilizing the fat-soluble material.

<Wetting Step of Hollow Fiber Membrane>

As for the assembled hollow fiber membrane blood purifier, the hollow fiber membrane is preferably wetted with an aqueous solution before sterilization from the viewpoint of protecting the hollow fiber membrane, and more preferably sterilized in an aqueous antioxidant solution. Examples of the method for wetting the hollow fiber membrane with an aqueous solution include a method for filling a container filled with the hollow fiber membrane with an aqueous solution, and a method for filling a container with an aqueous solution and then draining the solution with air flashing or the like. Above all, a method of filling the module with sodium pyrosulfite and/or an aqueous sodium carbonate solution in is preferable.

<Sterilization Step of Blood Treatment Device>

The hollow fiber membrane blood purifier is preferably subjected to sterilization treatment. Examples of the sterilization method include radiation sterilization, electron beam sterilization, high pressure steam sterilization, and ethylene oxide gas (EOG) sterilization.

Since the hollow fiber membrane containing the fat-soluble material has a risk of causing a hollow fiber failure due to extreme heating, radiation sterilization is preferable. In radiation sterilization, an electron beam, a gamma ray ($\gamma$ ray), an X-ray, or the like may be used. To precisely control the amount of acetic acid in the hollow fiber membrane blood purifier after sterilization, $\gamma$-ray sterilization is preferable. The irradiation dose of radiation is, in the case of a $\gamma$ ray or an electron beam, preferably 15 kGy or more and 50 kGy or less, and more preferably 20 kGy or more and 40 kGy or less.

Examples

Hereinafter, the present invention will be specifically described with reference to Examples and Comparative Examples, but the present invention is not limited by these Examples. The measurement methods used in Examples are as follows.

<Internal Diameter and Membrane Thickness of Hollow Fiber Membrane>

The inner diameter and membrane thickness of the hollow fiber membrane were measured as follows.

First, a dried hollow fiber membrane was cut perpendicular to the axial direction with a razor. Cutting was performed so that the hollow fiber membrane was not crushed and deformed upon cutting. Internal diameters and membrane thicknesses at arbitrary three points in the cross sections of the cut hollow fiber membrane were measured with a microscope, and average values thereof were determined as the inner diameter and the membrane thickness of the hollow fiber membrane.

<Amount of Acetic Acid Contained in Hollow Fiber Membrane Blood Purifier>

Wet Type

Filling liquids on the blood side and the dialysate side of the hollow fiber membrane blood purifier were extracted and mixed. The acetic acid concentration in the obtained filling liquid ($\mu$g/mL) was measured by ion chromatography. The measured acetic acid concentration was multiplied by the amount of filling liquid to calculate the amount of acetic acid contained in the blood purifier. Then, the amount of acetic acid calculated was divided by the hollow fiber membrane area, and the obtained value was determined as the amount of acetic acid per hollow fiber membrane area contained in the blood purifier (mg/m$^2$).

Dry Type

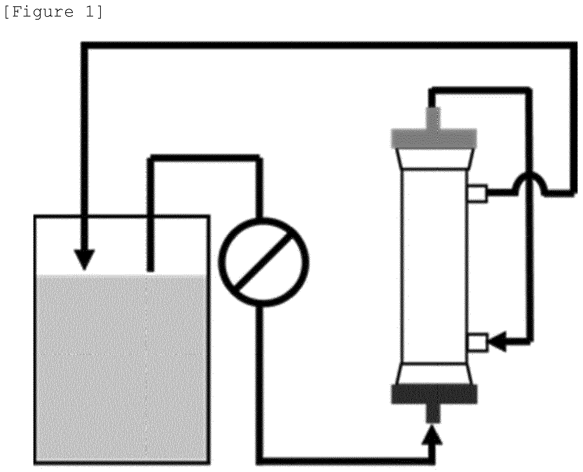

As shown in Figure 1, 1 L of water was allowed to circulate in the hollow fiber membrane blood purifier at 250 mL/min for 3 hours. The water to be circulated was allowed to flow from the inlet on the blood side, the outlet on the blood side, the inlet on the dialysate side, and the outlet on the dialysate side in the order presented so as to be a parallel flow. After circulation, the blood purifier inner liquid and the circulating liquid were stored, and the acetic acid concentration ($\mu$g/ mL) was measured by ion chromatography. The acetic acid concentration was multiplied by the amount of water (1 L), and the amount of acetic acid was calculated. Then, the amount of acetic acid calculated was divided by the hollow fiber membrane area, and the obtained value was determined as the amount of acetic acid per hollow fiber membrane area contained in the blood purifier(mg/m2).
Note that the membrane area when the amount of acetic acid is calculated is the nominal hollow fiber membrane area provided by manufacturers (the hollow fiber membrane area described in a label), or the internal surface area calculated from the product of the average internal diameter (diameter), circumference ratio, number, and effective length of the hollow fiber membrane. The effective length refers to the hollow fiber length having permeability, excluding the urethane sealing part and the like from the entire length of the hollow fiber membrane.

<Measurement of Water Permeation Performance>

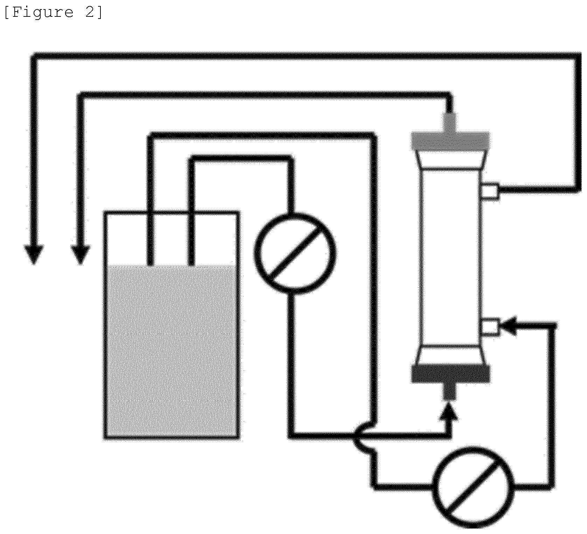

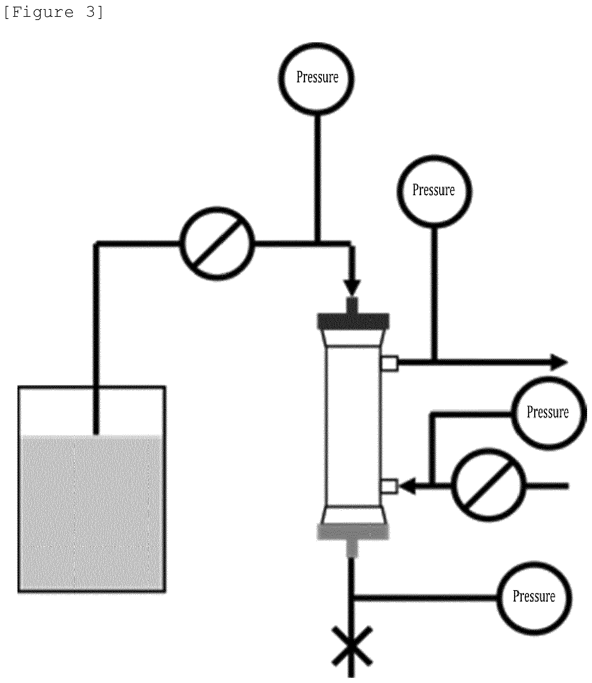

The hollow fiber membrane blood purifier was sufficiently subjected to priming and filled with water. Priming was carried out by allowing water to flow in a circuit shown in Figure 2. The flow rate on the blood side was set to 5 L/min and the flow rate on the dialysate side was set to 4 L/min, and priming was carried out for 5 min or more.
Then, the hollow fiber membrane blood purifier was attached to the circuit for the evaluation of water ultrafiltration rate shown in Figure 3. Water warmed to 37 to 38°C was poured from the inlet on the blood side at a flow rate of 300 mL/min on the blood side and 500 mL/min on the dialysate side, and each pressure at 56 to 115 seconds from the initiation of circulation was read.
Based on the read pressures, the water ultrafiltration rate (UFR) of the hollow fiber membrane blood purifier was calculated by the following equations. UFR [mL/Hr/mmHg/m$^2$] = 300 [mL/min] $\times$ 60 [min] $\div$ TMP [mmHg] $\div$ the membrane area [m$^2$]

$$TMP\ [mmHg] = (PBin+PBout)/2-(PDin+PDout)/2$$

wherein PBin [mmHg] is the pressure of the inlet on the blood side, PBout [mmHg] is the pressure of the outlet on the blood side, PDin [mmHg] is the pressure of the inlet on the dialysate side, and PDout [mmHg] is the pressure of the outlet on the dialysate side.
Note that the water ultrafiltration rate was measured for the hollow fiber membrane blood purifier before and after immobilization of the fat-soluble material.

<Amount of Fat-Soluble Material Immobilized in Hollow Fiber Membrane>

The hollow fiber membrane blood purifier was washed with water, dried, and then disassembled, and the hollow fiber membrane was collected and cut into about 4 cm. Washing with water was carried out at 5 L/min for 2 minutes. Drying was carried out with the air at room temperature at 60 L/min or more for 6 hours or more. 381 mL of ethanol per membrane area (m$^2$) of the hollow fiber membrane blood purifier was added to the collected hollow fiber, and the fat-soluble material was extracted while applying ultrasonic vibration at room temperature for 60 minutes. The quantitative manipulation was carried out by liquid chromatograph, and the amount of the fat-soluble material in the extraction liquid was determined by using the calibration curve obtained from the peak area of the standard solution of the fat-soluble material.

A column (Shodex Asahipak, ODP-506E packed column for HPLC) was attached to a high performance liquid chromatography apparatus (pump: JASCO PU-1580, detector: SHIMADZU RID-6A, Autoinjector: SHIMADZU SIL-6B, data processing: Tosoh GPC-8020, column oven: GL Sciences556), methanol for high-performance liquid chromatography as a mobile phase was made to flow at a flow rate of 1 mL/min at a column temperature of 40°C, and the concentration of the fat-soluble material was determined from the absorption peak area of an ultraviolet part. The amount of the fat-soluble material immobilized in the hollow fiber membrane ($mg/m^2$) was determined from this concentration by taking the extraction efficiency as 100%.

The amount of the fat-soluble material partially oxidized by the sterilization treatment was also included in the amount of the fat-soluble material per 1 $m^2$ of the hollow fiber membrane surface. To determine the amount of the fat-soluble material partially oxidized by the sterilization treatment, radiation of 50 kGy was applied in advance in the air to the fat-soluble material to be used to prepare the calibration curve, and the absorption peak of the partially oxidized fat-soluble material determined in advance was included in the peak groups to be used for area calculation, and added.

<Measurement of Hollow Fiber Elongation>

The hollow fiber elongation in the hollow fiber membrane blood purifier was measured as follows.

First, the hollow fiber membrane blood purifier after sterilization was washed with water and then dismantled, and hollow fibers (a whole hollow fiber membrane module) were cut out. The hollow fibers (a whole hollow fiber membrane module) cut out were dried in a vacuum dryer. Drying was carried out until the hollow fiber weights before and after drying had no difference (the difference in the hollow fiber weights before and after drying (confirmation interval: 12 hours) was in the range of ±0.05 g). The humidity in the test chamber for hollow fiber elongation was set to 60%, and the temperature was set to room temperature (20 to 25°C). Then, a hollow fiber was pinched in a Tensilon tester such that the distance between chucks was 200 mm. One side of the Tensilon tester was fixed, and the hollow fiber was pulled at a test speed of 300 mm/min. The hollow fiber was pulled until it was broken, and the hollow fiber length when it was broken was divided by the hollow fiber length (200 mm) at a load of 0, whereby the hollow fiber elongation was calculated. Since measurement variation occurs in hollow fiber elongation, measurements were performed n = 20 or more, and the average value thereof was determined as the hollow fiber elongation of the sample.

<Measurement of Amount of Bovine Alb Leakage>

With respect to the hollow fiber membrane blood purifier, the amount of bovine Alb leakage was measured under predilution HDF conditions (the flow rate on the blood side (QB) = 250 mL/min, the flow rate on the dialysate side (QD) = 600 mL/min, the infusion solution flow rate (Qs) = 12 L/h) from the initiation of the test until 1 hour. With respect to the circulating bovine blood, the whole protein concentration was adjusted to 6.0±0.5 g/dL, and hematocrit was adjusted to 32±3%.

[Example 1]

A membrane forming dope composed of 17 parts by mass of polysulfone (hereinafter, also referred to as "PSf") (P-1700 manufactured by Solvay Japan Co., Ltd.), 4 parts by mass of polyvinylpyrrolidone (hereinafter, also referred to as "PVP") (K-90 manufactured by BASF), and 79 parts by mass of dimethylacetamide (hereinafter, also referred to as "DMAc") (special grade reagent, Kishida Chemical Co.,Ltd.) was prepared. A 58% by mass aqueous DMAc solution was used as the hollow inner liquid, and discharged from a spinneret having a slit width of 50 $\mu$m. At this time, the temperature of the membrane forming dope upon discharge was 40°C. The discharged dope passed through a fall part covered with a hood was immersed in a coagulation bath at 60°C made of water for coagulation. At this time, the air gap length was set to 400 mm and the spinning rate was set to 34 m/min. Thereafter, the resultant was subjected to the washing step and the drying step to obtain a blood treatment membrane. The amount of the membrane forming dope and hollow inner liquid discharged was adjusted so that the membrane thickness after drying was 43 $\mu$m and the inner diameter was 200 $\mu$m.

Then, a cylindrical container having two nozzles for letting liquid in and out was filled with a bundle of 13000 hollow fiber membranes wound after drying, both end parts thereof were embedded with a urethane resin. Then, the cured urethane portions were cut, and the both end parts were processed into end parts at which the hollow fiber membrane was open. A header cap having a nozzle for letting blood in (out) was loaded to the both end parts, whereby the shape of the hollow fiber membrane blood purifier having a membrane area of 2.2 $m^2$ was assembled. The water ultrafiltration rate in the hollow fiber membrane blood purifier at this point of time was measured by the above method and found to be 252 mL/Hr/mmHg/$m^2$.

Then, by carrying out the following liquid-infusing step, dewatering step, and drying step, vitamin E was immobilized on the hollow fiber membrane as the fat-soluble material.

(Liquid-infusing step)

When the total amount of the coating solution is taken as 100% by mass, 500 mL of a coating solution (vitamin E coating solution) obtained by dissolving 0.05% by mass of vitamin E ($\alpha$-tocopherol (Wako Pure Chemical Industries, Ltd. special grade)) in an aqueous solution of 57% by mass of isopropanol was infused from an inlet nozzle on the blood side (hereinafter, also referred to as the "B side") of the hollow fiber membrane blood purifier at a temperature of 24°C to the inner surface side of the hollow fiber membrane to bring vitamin E into contact with the hollow fiber membrane. At this time, the coating solution was infused to the inside of the hollow fiber with the port on the dialysate side (hereinafter, also referred to as the "D side") of the hollow fiber membrane blood purifier closed.

(Dewatering step)

Then, the pressure difference (B side - D side) was set so as to be +0.05 MPa, and dewatering was carried out by feeding compressed air from the B side and the D side.

(Drying Step)

Thereafter, oxygen-containing air at 40 to 45°C was fed in a ratio (volume ratio) of B side:D side = 6:1, and the solvent was removed by drying.
Through the above liquid-infusing step, dewatering step, and drying step, vitamin E was immobilized on the hollow fiber membrane.
Then, the wetting step was carried out as follows. First, the hollow fiber membrane blood purifier was washed with water. Thereafter, the blood side flow path (inner surface side) and the filtrate side flow path (outer surface side) of the hollow fiber membrane blood purifier were filled with an aqueous solution containing 0.06% by mass of sodium pyrosulfite as an antioxidant and further containing 0.03% by mass of sodium carbonate for adjusting pH.
After the wetting step, the hollow fiber membrane blood purifier was irradiated with γ ray at 25 kGy for sterilization with each nozzle sealed, thereby obtaining the hollow fiber membrane blood purifier.
The amount of acetic acid per hollow fiber membrane area in the obtained hollow fiber membrane blood purifier was measured by the above method and found to be 14.3 mg/m$^2$. Further, the water ultrafiltration rate in the obtained hollow fiber membrane blood purifier was measured by the above method and found to be 223 mL/Hr/mmHg/m$^2$. Further, the hollow fiber elongation in the obtained hollow fiber membrane blood purifier was measured by the above method and found to be 61%. The amount of the fat-soluble material (vitamin E) immobilized in the hollow fiber membrane was 363 mg/m$^2$.

[Example 2]

The hollow fiber membrane blood purifier of Example 2 was obtained in the same manner as in Example 1, except that, in the fat-soluble material immobilization step, the amount of the coating solution in the liquid-infusing step was changed to 800 mL, and the pressure difference between the inside (B side) and the outside (D side) of the hollow fiber (inside - outside) in the dewatering step was changed to +0.10 MPa, as shown in Table 1.
The amount of acetic acid per hollow fiber membrane area in the obtained hollow fiber membrane blood purifier was measured by the above method and found to be 17.4 mg/m$^2$. The water ultrafiltration rate in the obtained hollow fiber membrane blood purifier was measured by the above method and found to be 239 mL/Hr/mmHg/m$^2$. Further, the hollow fiber elongation in the obtained hollow fiber membrane blood purifier was measured by the above method and found to be 62%. The amount of the fat-soluble material (vitamin E) immobilized in the hollow fiber membrane was 378 mg/m$^2$.

[Example 3]

The hollow fiber membrane blood purifier of Example 3 was obtained in the same manner as in Example 1, except that, in the fat-soluble material immobilization step, the amount of the coating solution in the liquid-infusing step was changed to 700 mL, and the pressure difference in the dewatering step was changed to 0 MPa, as shown in Table 1.
The amount of acetic acid per hollow fiber membrane area in the obtained hollow fiber membrane blood purifier was measured by the above method and found to be 10.4 mg/m$^2$. The water ultrafiltration rate in the obtained hollow fiber membrane blood purifier was measured by the above method and found to be 199 mL/Hr/mmHg/m$^2$. Further, the hollow fiber elongation in the obtained hollow fiber membrane blood purifier was measured by the above method and found to be 62%. The amount of the fat-soluble material (vitamin E) immobilized in the hollow fiber membrane was 312 mg/m$^2$.

[Example 4]

The hollow fiber membrane blood purifier of Example 4 was obtained in the same manner as in Example 1, except that, in the fat-soluble material immobilization step, the amount of the coating solution in the liquid-infusing step was changed to 500 mL, and the pressure difference in the dewatering step was changed to -0.10 MPa, as shown in Table 1.

The amount of acetic acid per hollow fiber membrane area in the obtained hollow fiber membrane blood purifier was measured by the above method and found to be 1.3 mg/m$^2$. The water ultrafiltration rate in the obtained hollow fiber membrane blood purifier was measured by the above method and found to be 163 mL/Hr/mmHg/m$^2$. Further, the hollow fiber elongation in the obtained hollow fiber membrane blood purifier was measured by the above method and found to be 61%. The amount of the fat-soluble material (vitamin E) immobilized in the hollow fiber membrane was 265 mg/m$^2$.

[Example 5]

The hollow fiber membrane blood purifier of Example 5 was obtained in the same manner as in Example 1, except that, in the fat-soluble material immobilization step, the pressure difference in the dewatering step was changed to -0.05 MPa, as shown in Table 1.

The amount of acetic acid per hollow fiber membrane area in the obtained hollow fiber membrane blood purifier was measured by the above method and found to be 1.5 mg/m$^2$. The water ultrafiltration rate in the obtained hollow fiber membrane blood purifier was measured by the above method and found to be 172 mL/Hr/mmHg/m$^2$. Further, the hollow fiber elongation in the obtained hollow fiber membrane blood purifier was measured by the above method and found to be 61%. The amount of the fat-soluble material (vitamin E) immobilized in the hollow fiber membrane was 287 mg/m$^2$.

[Comparative Example 1]

The hollow fiber membrane blood purifier of Comparative Example 1 was obtained in the same manner as in Example 1, except that the DMAc concentration of the hollow inner liquid when the hollow fiber membrane was produced was changed to 56% by mass, the spinning rate was changed to 32 m/min, and as shown in Table 2, the inner diameter of the hollow fiber membrane was changed to 185 $\mu$m, the membrane thickness was changed to 45 $\mu$m, the number of hollow fiber membranes was changed to 13500, the membrane area of the hollow fiber membrane was changed to 2.1 m$^2$, and in the fat-soluble material immobilization step, the amount of the coating solution in the liquid-infusing step was changed to 750 mL, and the pressure difference between the inside (B side) and the outside (D side) of the hollow fiber (inside - outside) in the dewatering step was changed to -0.25 MPa.

The amount of acetic acid per hollow fiber membrane area in the obtained hollow fiber membrane blood purifier was measured by the above method and found to be 2.5 mg/m$^2$. The water ultrafiltration rate in the obtained hollow fiber membrane blood purifier was measured by the above method and found to be 155 mL/Hr/mmHg/m$^2$, resulting in insufficient water ultrafiltration rate. Note that the water ultrafiltration rate in the hollow fiber membrane blood purifier before the fat-soluble material immobilization step was 246 mL/Hr/mmHg/m$^2$. Further, the hollow fiber elongation in the obtained hollow fiber membrane blood purifier was measured by the above method and found to be 65%. The amount of the fat-soluble material (vitamin E) immobilized in the hollow fiber membrane was 152 mg/m$^2$.

[Comparative Example 2]

The hollow fiber membrane blood purifier of Comparative Example 2 was obtained in the same manner as in Comparative Example 1, except that the DMAc concentration of the hollow inner liquid when the hollow fiber membrane was produced was changed to 58% by mass.

The amount of acetic acid per hollow fiber membrane area in the obtained hollow fiber membrane blood purifier was measured by the above method and found to be 2.1 mg/m$^2$. The water ultrafiltration rate in the obtained hollow fiber membrane blood purifier was measured by the above method and found to be 184 mL/Hr/mmHg/m$^2$. Note that the water ultrafiltration rate in the hollow fiber membrane blood purifier before the fat-soluble material immobilization step was 287 mL/Hr/mmHg/m$^2$. Further, the hollow fiber elongation in the obtained hollow fiber membrane blood purifier was measured by the above method and found to be 53%, which was inferior in terms of the pressure resistance strength as compared with Example 1. The amount of the fat-soluble material (vitamin E) immobilized in the hollow fiber membrane was 141 mg/m$^2$.

[Comparative Example 3]

The hollow fiber membrane blood purifier of Comparative Example 3 was obtained in the same manner as in Comparative Example 1, except that the DMAc concentration of the hollow inner liquid when the hollow fiber membrane was produced was changed to 64% by mass.

The amount of acetic acid per hollow fiber membrane area in the obtained hollow fiber membrane blood purifier was measured by the above method and found to be 2.1 mg/m$^2$. The water ultrafiltration rate in the obtained hollow fiber membrane blood purifier was measured by the above method and found to be 344 mL/Hr/mmHg/m$^2$. Note that the water ultrafiltration rate in the hollow fiber membrane blood purifier before the fat-soluble material immobilization step was 411 mL/Hr/mmHg/m$^2$. Further, the hollow fiber elongation in the obtained hollow fiber membrane blood purifier was measured by the above method and found to be 45%, which was inferior in terms of the pressure resistance strength as compared with Example 1. The amount of the fat-soluble material (vitamin E) immobilized in the hollow fiber membrane was 144 mg/m$^2$.

[Comparative Example 4]

A membrane forming dope composed of 16 parts by mass of PSf (P-1700 manufactured by Solvay Japan Co., Ltd.), 3.5 parts by mass of PVP (K-90 manufactured by BASF), and 81.5 parts by mass of DMAc (special grade reagent, Kishida Chemical Co.,Ltd.) was prepared. The hollow fiber membrane blood purifier of Comparative Example 4 was obtained in the same manner as in Comparative Example 1, except that a 46% by mass aqueous DMAc solution was used as the hollow inner liquid and discharged from a spinneret having a slit width of 50 μm.

The amount of the membrane forming dope and hollow inner liquid discharged was adjusted so that the membrane thickness after drying was 43 μm and the inner diameter was 200 μm.

Then, a cylindrical container having two nozzles for letting liquid in and out was filled with a bundle of 13000 hollow fiber membranes wound after drying, and both end parts thereof were embedded with a urethane resin. Then, the cured urethane portions were cut, and the both end parts were processed into end parts at which the hollow fiber membrane was open. A header cap having a nozzle for letting blood in (out) was loaded to the both end parts, whereby the shape of the hollow fiber membrane blood purifier having a membrane area of 2.2 m$^2$ was assembled. The water ultrafiltration rate in the hollow fiber membrane blood purifier at this point of time was measured by the above method and found to be 260 mL/Hr/mmHg/m$^2$.

Further, the hollow fiber elongation in the obtained hollow fiber membrane blood purifier was measured by the above method and found to be 64%. However, since no fat-soluble material was immobilized on the hollow fiber membrane, the hollow fiber membrane blood purifier of Comparative Example 4 had no antioxidant performance.

[Table 1]

| | | | Example | | | | |
|---|---|---|---|---|---|---|---|
| | | | 1 | 2 | 3 | 4 | 5 |
| Membrane area | | | 2.2 m$^2$ | | | | |
| Hollow fiber inner diameter/membrane thickness | | | 200 μm/43 μm | | | | |
| Fat-soluble material immobilization step | Liquid-infusing step | Amount of coating solution | 600 mL | 800 mL | 700 mL | 500 mL | 500 mL |
| | Dewatering step | Pressure difference (inside - outside) | +0.05 MPa | +0.10 MPa | 0 MPa | -0.10 MPa | -0.05 MPa |
| | Drying step | B side: D side (Ratio of air flow rate) | 6:1 | 6:1 | 6:1 | 6:1 | 6:1 |
| Water ultrafiltration rate before coating [mL/Hr/mmHg/m$^2$] (before fat-soluble material immobilization step) | | | 252 | 252 | 252 | 252 | 252 |
| Water ultrafiltration rate after coating [mL/Hr/mmHg/m$^2$] (after fat-soluble material immobilization step) | | | 223 | 239 | 199 | 163 | 172 |
| Alb leakage per hour (bovine blood predilution HDF) | | | 2.4 g | 3.0 g | 2.1 g | 1.0 g | 1.2 g |
| Amount of acetic acid per hollow fiber membrane area (mg/m$^2$) | | | 14.3 | 17.4 | 10.4 | 1.3 | 1.5 |
| Amount of vitamin E immobilized (mg/m$^2$) | | | 363 | 378 | 312 | 265 | 287 |

(continued)

| | Example | | | | |
|---|---|---|---|---|---|
| Hollow fiber elongation | 61% | 62% | 62% | 61% | 61% |

[Table 2]

| | | | Comparative Example | | | |
|---|---|---|---|---|---|---|
| | | | 1 | 2 | 3 | 4 |
| Membrane area | | | 2.1 m² | | | 2.2 m² |
| Hollow fiber inner diameter/membrane thickness | | | 185 μm/45 μm | | | 200 μm/45 μm |
| Fat-soluble material immobilizatio n step | Liquid-infusing step | Amount of coating solution | 750 mL | 750 mL | 750 mL | - |
| | Dewatering step | Pressure difference (inside - outside) | -0.25 MPa | -0.25 MPa | -0.25 MPa | - |
| | Drying step | B side: D side (Ratio of air flow rate) | 6:1 | 6:1 | 6:1 | - |
| Water ultrafiltration rate before coating [mL/Hr/mmHg/m²] (before fat-soluble material immobilization step) | | | 246 | 287 | 411 | 260 |
| Water ultrafiltration rate after coating [mL/Hr/mmHg/m²] (after fat-soluble material immobilization step) | | | 155 | 184 | 344 | - |
| Alb leakage per hour (bovine blood predilution HDF) | | | 0.2 g | 1.5 g | 5 g | 1.5 g |
| Amount of acetic acid per hollow fiber membrane area (mg/m²) | | | 2.5 | 2.1 | 2.1 | N.D. |
| Amount of vitamin E immobilized (mg/m²) | 152 | 141 | 144 | N.D. | | |
| Hollow fiber elongation | 65% | 53% | 45% | 64% | | |

In comparison of Examples 1 to 5 and Comparative Examples 1 to 4, it was found that, when the fat-soluble material is immobilized by setting the amount of acetic acid per hollow fiber membrane area contained in the blood purifier to 1 to 40 mg/m² and water ultrafiltration rate to 163 mL/Hr/mmHg/m² or more and the elongation of 55% or more is further ensured, use in HDF is enabled, and the amount of bovine Alb leakage under predilution HDF conditions can be controlled to the range of 1 to 3 g per hour.

The present application is based on Japanese Patent application (Japanese Patent Application No. 2021-181728) filed on November 8, 2021, and the content of which is incorporated herein by reference in its entirety.

Industrial Applicability

According to the present invention, in the hollow fiber membrane blood purifier containing a fat-soluble material, the amount of bovine Alb leakage under predilution HDF conditions can be controlled to the range of 1 to 3 g per hour. The hollow fiber membrane blood purifier of the present invention has industrial applicability in, for example, blood purification therapy.

Claims

1. A hollow fiber membrane blood purifier comprising a hollow fiber membrane and a container to be filled with the hollow fiber membrane, wherein

the hollow fiber membrane contains a fat-soluble material,
an amount of acetic acid per hollow fiber membrane area contained in the blood purifier is 1 to 40 mg/m$^2$,
water ultrafiltration rate is 163 mL/Hr/mmHg/m$^2$ or more, and
hollow fiber elongation is 55% or more.

2. The hollow fiber membrane blood purifier according to claim 1, wherein the fat-soluble material contains at least one selected from the group consisting of vitamin A, vitamin D, vitamin E, and vitamin K.

3. The hollow fiber membrane blood purifier according to claim 1 or 2, wherein the hollow fiber membrane is a hollow fiber membrane immobilized with the fat-soluble material.

4. The hollow fiber membrane blood purifier according to claim 1 or 2, wherein the hollow fiber membrane is a hollow fiber membrane immobilized with a lipophilic vitamin.

5. The hollow fiber membrane blood purifier according to claim 1 or 2, wherein the amount of acetic acid per hollow fiber membrane area contained in the blood purifier is 1 to 30 mg/m$^2$.

6. The hollow fiber membrane blood purifier according to claim 1 or 2, wherein water ultrafiltration rate is 163 to 350 mL/Hr/mmHg/m$^2$.

7. The hollow fiber membrane blood purifier according to claim 1 or 2, wherein hollow fiber elongation is 61 to 80%.

8. The hollow fiber membrane blood purifier according to claim 1 or 2, wherein an amount of the fat-soluble material immobilized in the hollow fiber membrane is 1 to 500 mg/m$^2$.

9. The hollow fiber membrane blood purifier according to claim 1 or 2, wherein a material constituting the hollow fiber membrane contains at least one selected from the group consisting of a hydrophilic polymer and a hydrophobic polymer.

10. The hollow fiber membrane blood purifier according to claim 1 or 2, wherein an inner diameter of the hollow fiber membrane is 170 $\mu$m or more and 250 $\mu$m or less.

11. The hollow fiber membrane blood purifier according to claim 1 or 2, wherein a membrane thickness of the hollow fiber membrane is 10 $\mu$m or more and 50 $\mu$m or less.

12. A method for producing the hollow fiber membrane blood purifier according to claim 1, comprising

an immobilization step of immobilizing a fat-soluble material on a hollow fiber membrane,
wherein, in the immobilization step, a coating solution obtained by dissolving the fat-soluble material in an organic solvent is infused to an inside of hollow fiber, and a pressure difference between the inside and an outside of the hollow fiber (inside - outside) when the coating solution is dewatered with compressed air is set to -0.1 MPa or more.

13. The method for producing the hollow fiber membrane blood purifier according to claim 12, wherein, in the immobilization step, the hollow fiber membrane is dried with oxygen-containing air at 40 to 60°C after the coating solution is dewatered.

14. The method for producing the hollow fiber membrane blood purifier according to claim 12 or 13, further comprising a step of wetting the hollow fiber membrane.

15. The method for producing the hollow fiber membrane blood purifier according to claim 12 or 13, further comprising a step of subjecting the hollow fiber membrane blood purifier to sterilization treatment.

[Figure 1]

[Figure 2]

[Figure 3]

**EP 4 431 127 A1**

## INTERNATIONAL SEARCH REPORT

International application No.

**PCT/JP2022/041409**

| A. | CLASSIFICATION OF SUBJECT MATTER |
|---|---|

*A61M 1/18*(2006.01)i; *B01D 63/02*(2006.01)i
FI:   A61M1/18 500; B01D63/02

According to International Patent Classification (IPC) or to both national classification and IPC

| B. | FIELDS SEARCHED |
|---|---|

Minimum documentation searched (classification system followed by classification symbols)

    A61M1/18; B01D63/02

Documentation searched other than minimum documentation to the extent that such documents are included in the fields searched

    Published examined utility model applications of Japan 1922-1996
    Published unexamined utility model applications of Japan 1971-2022
    Registered utility model specifications of Japan 1996-2022
    Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2006-296931 A (ASAHI KASEI MEDICAL CO LTD) 02 November 2006 (2006-11-02)<br>    claims 1, 9, paragraphs [0015], [0032]-[0056] | 1-15 |
| Y | JP 2005-342093 A (TOYO BOSEKI) 15 December 2005 (2005-12-15)<br>    claim 1, paragraphs [0024]-[0025], [0040] | 1-15 |
| A | WO 2015/093493 A1 (ASAHI KASEI MEDICAL CO LTD) 25 June 2015 (2015-06-25)<br>    entire text, all drawings | 1-15 |
| A | WO 2009/072548 A1 (ASAHI KASEI KURARAY MEDICAL CO., LTD.) 11 June 2009<br>(2009-06-11)<br>    entire text, all drawings | 1-15 |
| A | JP 2013-094525 A (TOYOBO CO LTD) 20 May 2013 (2013-05-20)<br>    entire text, all drawings | 1-15 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 November 2022** | **13 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

23

**INTERNATIONAL SEARCH REPORT**
Information on patent family members

International application No.

**PCT/JP2022/041409**

| Patent document cited in search report | | | Publication date (day/month/year) | Patent family member(s) | | | Publication date (day/month/year) |
|---|---|---|---|---|---|---|---|
| JP | 2006-296931 | A | 02 November 2006 | (Family: none) | | | |
| JP | 2005-342093 | A | 15 December 2005 | (Family: none) | | | |
| WO | 2015/093493 | A1 | 25 June 2015 | US | 2016/0354728 | A1 | |
| | | | | EP | 3085400 | A1 | |
| | | | | CN | 105813667 | A | |
| WO | 2009/072548 | A1 | 11 June 2009 | US | 2010/0258496 | A1 | |
| | | | | EP | 2216060 | A1 | |
| | | | | CN | 101888863 | A | |
| JP | 2013-094525 | A | 20 May 2013 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006296931 A
- JP 2008093228 A
- JP 2013009761 A

- WO 2014171172 A
- JP 2021181728 A

**Non-patent literature cited in the description**

- Polymer Data Handbook, Basic Edition. The Society of Polymer Science, Baifukan Co, 30 January 1986, 591-593